# EUROPEAN PATENT APPLICATION

(11) **EP 2 669 821 A2**
(43) Date of publication of application: **04.12.2013**
(21) Application number: 13167085.3
(22) Date of filing: 08.05.2013
(51) Int. Cl.: G06F 17/30

(54) **Control system asset management**

(30) Priority: 08.05.2012 US 201213466651
(71) Applicant: General Electric Company, Schenectady, New York 12345 (US)
(72) Inventor: Goli, Balajose, 500081 Hyderabad (IN); Banerjee, Abhik, 500081 Hyderabad (IN); Romanik, Christina Ann, Salem, VA Virginia 24153-6422 (US); Ojha, Pradyumna, 500081 Hyderabad (IN); Bolla, Veera Paparao, 500081 Hyderabad (IN)
(74) Representative: Picker, Madeline Margaret

(57) **Abstract**

A control system asset management method includes calling a web service for at least one of persisting, reading, and saving an edited control system asset, receiving a data structure associated with the control system asset and control system asset information, in response to receiving the data structure, generating a message verifying receipt of the data structure and making a call to a database (125) for at least one of persisting, reading and saving an edited control system asset, wherein the database (125) is configured to store the data structure and relationships of the data structure to a plurality of data structures in the control system (100).

## Description

The subject matter disclosed herein relates to control system assets, and more particularly to systems and methods to persist, read and save edited power plant assets to a federated database using web services.

A power plant comprises of different types of systems and equipment (components). An end user, such as a plant engineer identifies and each component and represents them as an asset in a database. The end user then identifies the logical relationship that exists between the various components in a plant. These relationships are logically configured to represent overall power plant and are stored in the database. Currently, power plants and assets are described and stored in a database known as the Federated Model (FM). The structure stored in the FM and representing the power plant and its assets is known as the Plant Informational Model (PIM). Currently, there is no straight forward way to save or read the configured power plant asset information to or from the federated data source such as the FM. If there are any changes to the PIM or any particular asset, a user must configure the entire PIM as well as the information related to each and every asset about the plant. In addition, the logical relationship between assets must be established each time there is a change.

According to one aspect of the invention, a control system asset management method is described. The method includes calling a web service for at least one of persisting, reading, and saving an edited control system asset, receiving a data structure associated with the control system asset and control system asset information, in response to receiving the data structure, generating a message verifying receipt of the data structure and making a call to a database for at least one of persisting, reading and saving an edited control system asset, wherein the database is configured to store the data structure and relationships of the data structure to a plurality of data structures in the control system.

According to another aspect of the invention, a computer program product for managing control system assets is described. The computer program product includes a non-transitory computer readable medium storing instructions for causing a computer to implement a method. The method includes calling a web service for at least one of persisting, reading, and saving an edited control system asset, receiving a data structure associated with the control system asset and control system asset information, in response to receiving the data structure, generating a message verifying receipt of the data structure and making a call to a database for at least one of persisting, reading and saving an edited control system asset, wherein the database is configured to store the data structure and relationships of the data structure to a plurality of data structures in the control system.

According to yet another aspect of the invention, a control system asset management server is described. The server includes a processor coupled to a database and configured to call a web service for at least one of persisting, reading, and saving an edited control system asset, receive a data structure associated with the control system asset and control system asset information, in response to receiving the data structure, generate a message verifying receipt of the data structure and make a call to the database for at least one of persisting, reading and saving an edited control system asset, wherein the database is configured to store the data structure and relationships of the data structure to a plurality of data structures in the control system.

These and other advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 illustrates an exemplary system for persisting, reading and saving edited control system assets;
FIG. 2 illustrates an exemplary embodiment of a computing system;
FIG. 3 illustrates a flowchart for a method of persisting (saving) power plant assets in accordance with exemplary embodiments;
FIG. 4 illustrates a flowchart for a method of reading power plant asset information in accordance with exemplary embodiments; and
FIG. 5 illustrates a flowchart for a method for saving edited power plant information in accordance with exemplary embodiments.

The detailed description explains embodiments of the invention, together with advantages and features, by way of example with reference to the drawings.

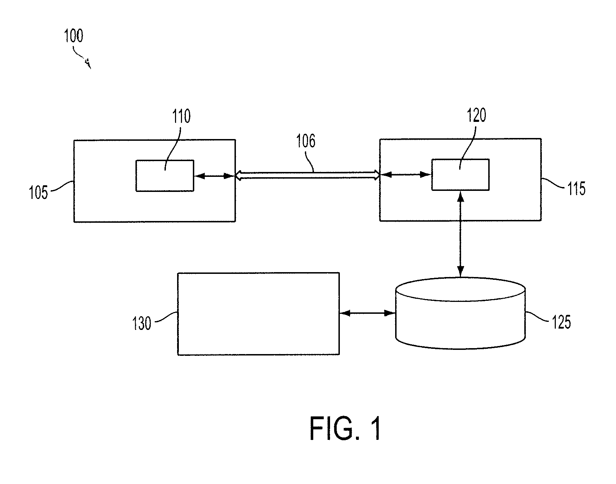

FIG. 1 illustrates an exemplary system 100 for persisting, reading and saving edited control system assets. For illustrative purposes a power plant is described herein. It will be appreciated that the systems and methods described herein can be applied to any type of control system. In exemplary embodiments, the system 100 includes a client computer 105 communicatively coupled to a server 115 via a secure transport layer (communications channel) 106. In exemplary embodiments, each of the client 105 and server 115 respectively include a process 110, 120 that are communicatively coupled to one another. The processes 110, 120 operate in conjunction as an advanced plant application layer (APAL) that provides a platform with a framework to interconnect power plant components, with the service and applications using a Service Oriented Architecture (SOA) such that the processes 110, 120 can operate as a web service over the layer 106. In exemplary embodiments, the system 100 further includes a database 125 (e.g., the FM) that is communicatively coupled to the server 115. As described herein, the database 125 stores asset information as a data structure (e.g., the PIM) related to a power plant 130. The PIM is a software object representation of the all the possible power plant or control system assets) and a structure that gives the end user the choice to configure the various components in the power plant in a hierarchical order. As such, any asset can be referred to as a PIM object (object). The software object is a unique common structure that is defined in the process 110 to store the entire asset information and share across the system 100.

In exemplary embodiments, the system 100 implements the processes 110, 120 to manage power plant assets including persisting, reading and saving edited power plant assets. The processes 110, 120 include instructions for a method of persisting or saving the control system assets information to the database 125 implementing a web service. The processes 110, 120 also include instructions for a method of reading the persisted power plant asset information from the database 125 implementing a web service. The processes 110, 120 further include instructions for a method of saving the edited power plant asset information to the database 125 implementing a web service. For example, the user can access the process 110 as an interface in order to make changes to current assets, read assets, edit and save any current or retrieved assets. In addition, the process 120 can be implemented to enable to user to retrieve the assets stored in the database 125, and save and newly configured or edited assets back to the database 125 for future retrieval. As such, the processes 110, 120 provide a seamless and transparent web service for accessing the database 125.

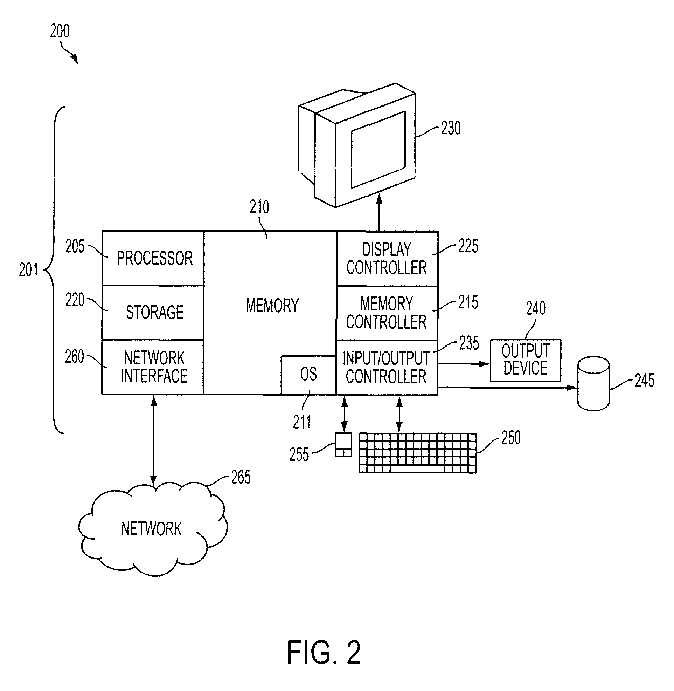

In exemplary embodiments, any suitable computing device can be implemented for the client 105 and the server 115 as now described. FIG. 2 illustrates an exemplary embodiment of a computing system 200 that can be implemented as a computing device for the power plant asset management methods described herein. The methods described herein can be implemented in software (e.g., firmware), hardware, or a combination thereof. In exemplary embodiments, the methods described herein are implemented in software, as an executable program, and is executed by a special or general-purpose digital computer, such as a personal computer, workstation, minicomputer, or mainframe computer. The system 200 therefore includes general-purpose computer 201.

In exemplary embodiments, in terms of hardware architecture, as shown in FIG. 2, the computer 201 includes a processor 205, memory 210 coupled to a memory controller 215, and one or more input and/or output (I/O) devices 240, 245 (or peripherals) that are communicatively coupled via a local input/output controller 235. The input/output controller 235 can be, but is not limited to, one or more buses or other wired or wireless connections, as is known in the art. The input/output controller 235 may have additional elements, which are omitted for simplicity, such as controllers, buffers (caches), drivers, repeaters, and receivers, to enable communications. Further, the local interface may include address, control, and/or data connections to enable appropriate communications among the aforementioned components.

The processor 205 is a hardware device for executing software, particularly that stored in memory 210. The processor 205 can be any custom made or commercially available processor, a central processing unit (CPU), an auxiliary processor among several processors associated with the computer 201, a semiconductor based microprocessor (in the form of a microchip or chip set), a macroprocessor, or generally any device for executing software instructions.

The memory 210 can include any one or combination of volatile memory elements (e.g., random access memory (RAM, such as DRAM, SRAM, SDRAM, etc.)) and nonvolatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 210 may incorporate electronic, magnetic, optical, and/or other types of storage media. Note that the memory 210 can have a distributed architecture, where various components are situated remote from one another, but can be accessed by the processor 205.

The software in memory 210 may include one or more separate programs, each of which comprises an ordered listing of executable instructions for implementing logical functions. In the example of FIG. 2, the software in the memory 210 includes the power plant asset management methods described herein in accordance with exemplary embodiments and a suitable operating system (OS) 211. The OS 211 essentially controls the execution of other computer programs, such the power plant asset management systems and methods as described herein, and provides scheduling, input-output control, file and data management, memory management, and communication control and related services.

The power plant asset management methods described herein may be in the form of a source program, executable program (object code), script, or any other entity comprising a set of instructions to be performed. When a source program, then the program needs to be translated via a compiler, assembler, interpreter, or the like, which may or may not be included within the memory 210, so as to operate properly in connection with the OS 211. Furthermore, the power plant asset management methods can be written as an object oriented programming language, which has classes of data and methods, or a procedure programming language, which has routines, subroutines, and/or functions.

In exemplary embodiments, a conventional keyboard 250 and mouse 255 can be coupled to the input/output controller 235. Other output devices such as the I/O devices 240, 245 may include input devices, for example but not limited to a printer, a scanner, microphone, and the like. Finally, the I/O devices 240, 245 may further include devices that communicate both inputs and outputs, for instance but not limited to, a network interface card (NIC) or modulator/demodulator (for accessing other files, devices, systems, or a network), a radio frequency (RF) or other transceiver, a telephonic interface, a bridge, a router, and the like. The system 200 can further include a display controller 225 coupled to a display 230. In exemplary embodiments, the system 200 can further include a network interface 260 for coupling to a network 265. The network 265 can be an IP-based network for communication between the computer 201 and any external server, client and the like via a broadband connection. The network 265 transmits and receives data between the computer 201 and external systems. In exemplary embodiments, network 265 can be a managed IP network administered by a service provider. The network 265 may be implemented in a wireless fashion, e.g., using wireless protocols and technologies, such as WiFi, WiMax, etc. The network 265 can also be a packet-switched network such as a local area network, wide area network, metropolitan area network, Internet network, or other similar type of network environment. The network 265 may be a fixed wireless network, a wireless local area network (LAN), a wireless wide area network (WAN) a personal area network (PAN), a virtual private network (VPN), intranet or other suitable network system and includes equipment for receiving and transmitting signals.

If the computer 201 is a PC, workstation, intelligent device or the like, the software in the memory 210 may further include a basic input output system (BIOS) (omitted for simplicity). The BIOS is a set of essential software routines that initialize and test hardware at startup, start the OS 211, and support the transfer of data among the hardware devices. The BIOS is stored in ROM so that the BIOS can be executed when the computer 201 is activated.

When the computer 201 is in operation, the processor 205 is configured to execute software stored within the memory 210, to communicate data to and from the memory 210, and to generally control operations of the computer 201 pursuant to the software. The power plant asset management methods described herein and the OS 211, in whole or in part, but typically the latter, are read by the processor 205, perhaps buffered within the processor 205, and then executed.

When the systems and methods described herein are implemented in software, as is shown in FIG. 2, the methods can be stored on any computer readable medium, such as storage 220, for use by or in connection with any computer related system or method.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

In exemplary embodiments, where the power plant asset management methods are implemented in hardware, the power plant asset management methods described herein can implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

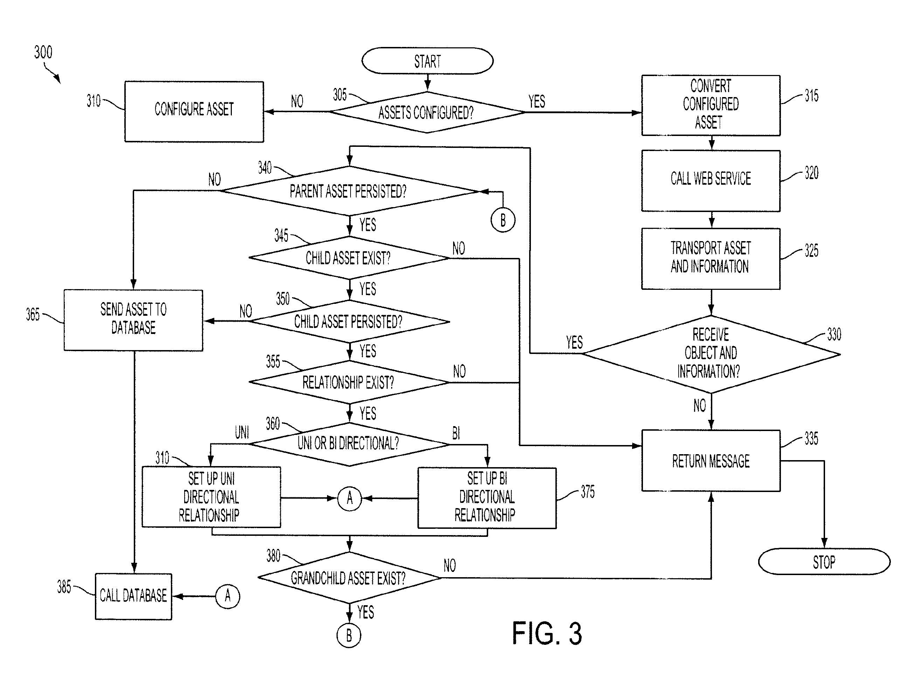

FIG. 3 illustrates a flowchart for a method 300 of persisting (saving) the power plant assets to the database 125 in accordance with exemplary embodiments. The method 300 starts with the user on the client 105 requesting the Web service persist operation from the APAL to save the asset configuration of the power plant 130. At block 305, the APAL determines if the assets are configured. If the assets are not configured at block 305, then the APAL configures the assets at block 310. In exemplary embodiments, the APAL takes the complete configured asset information and formulates a data structure (the software object) that includes all the information about the configured assets. If the assets are configured at block 305, then the APAL converts the configured asset information into a software object as described herein. At block 320, the APAL calls the persist web service. At block 325, the APAL transports the asset information and software object to the server 115 via the layer 106. At block 330, the APAL determines if the object and asset information has been received in the server 115. If the object and asset information are not received at block 330, then the APAL generates a message to the user at block 335 indicating that the object and asset information are not received. The user can then repeat the steps if necessary. For illustrative purposes, the power plant 130 includes a combined cycle block with one gas turbine and one steam turbine. It will be appreciated that this example is for illustrative purposes only and that several other assets are contemplated. If the object and asset information are received at block 330, then the APAL determines if a parent asset is persisted in the database 125 at block 340. In this way, the APAL checks whether a parent node (e.g., power plant object), which is considered as an asset is saved to the database 125 or not. If the parent asset is not persisted (saved) at block 340, then at block 365, the parent asset is saved to the database 125 at block 365. At block 385, the APAL makes specific calls to the database relating to persisting the parent asset. If the parent asset is persisted (saved) at block 340, then at block 345, the APAL determines if a child asset exists. In this way, the APAL checks whether the parent node (e.g., the power plant asset) has any other child objects (i.e., the Combined Cycle Block in the example). If there is no child asset at block 345, a message is sent to the user at block 335. The user can then take any necessary action to find the child node. If there is a child asset at block 345, then at block 350, the APAL determines if the child asset is persisted in the database 125. If the child asset is not persisted (saved) at block 350, then at block 365, the child asset is saved to the database 125 at block 365. At block 385, the APAL makes specific calls to the database relating to persisting the child asset. In this way the child node, in this case the combined cycle block is saved in the database 125. If the child asset is persisted (saved) at block 350, then at block 355, the APAL determines if there is a relationship. As such, once parent and child assets are saved into the database 125, the APAL can establish a link (relationship) that exists between the parent and child node. At a future time, when the parent node is to be retrieved from database 125, the child node (can also be retrieved along with the parent node, thereby maintaining integrity of the configuration that the user has created and saved into the database 125. If there is no relationship between the parent and child nodes at block 355, then a message can be generated to the user at block 335. The user can then take action if necessary. If a relationship between the parent and child node does exist at block 355, then at block 360, the APAL can determine if the relationship is uni-directional or bi-directional. The uni-directional and bi-directional relationships determine if any changes to a particular asset affects the nodes in one direction or both directions. Regardless of the relationship, the APAL sets up the uni-directional relationship at block 370 and the bi-directional relationship at block 375. The APAL makes calls to the database 125 at block 385 to store the relationship in the database 125. At block 380, the APAL determines if a grandchild asset exists. A grandchild asset becomes the logical parent for a next iteration of asset management (starting again at block 340). If there is no grandchild asset at block 380, then a message is sent to the user who can take necessary action. If there is a grandchild asset at block 380, then the method 300 repeats at block 340. The iterative loop between blocks 340, 380 continues for all the parent child relationship until the APAL encounters the last possible asset in the configuration that the user intends to save in the database 125. In exemplary embodiments, the process of parent creation and child creation, as well as the establishment of relationships between the nodes can be automated and can be complete in a single call o the database 125, for example, at block 385.

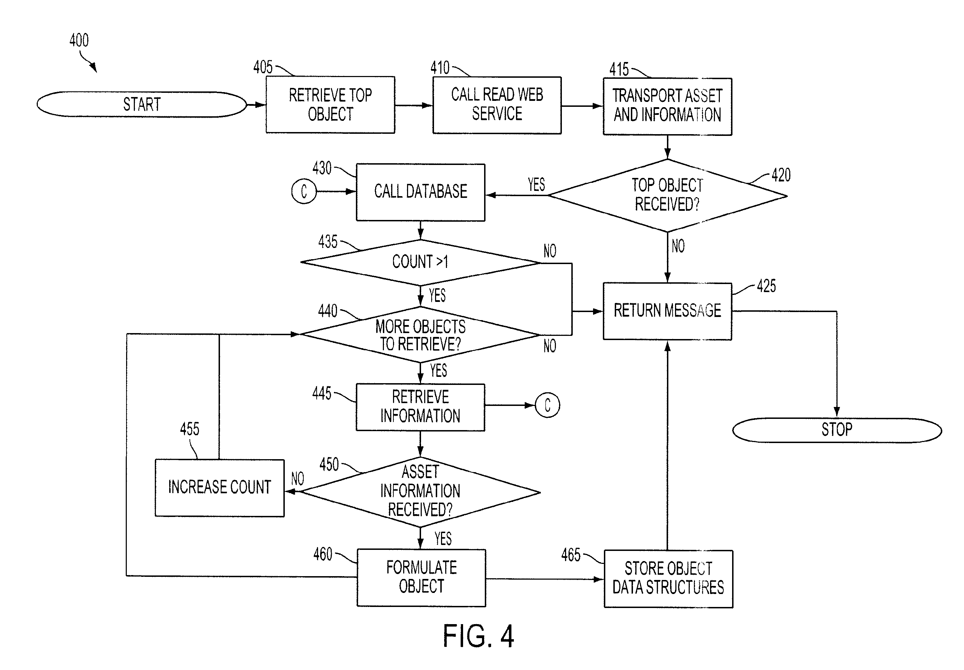

As described herein, the system 100 can also be implemented to read persisted power plant asset information from the database 125. FIG. 4 illustrates a flowchart for a method 400 of reading power plant asset information from the database 125 in accordance with exemplary embodiments. The method 400 starts with the user on the client 105 requesting the Web service read operation from the APAL. At block 405, the APAL retrieves the top available object, which is typically the power plant object. At block 410, the APAL calls the read web service by sending the top object. At block 415, the APAL transports the asset and the information to the server 115 via the transport layer 106. At block 420, the APAL determines if the top object (including the asset and information) has been received in the server 115. If the top object is not received in the server 115 at block 420, then the APAL sends a message to the end user at block 425. The end user can then take action such as resending the top object. If the top object is received in the server 115 at block 420, then the APAL calls the database 125 at block 430. As such, the APAL accesses the database 125 to obtain a chain of objects associated with the top object. At block 435, the APAL checks to see if a top objects count is greater than one. If the object count is not greater than one at block 435, then the APAL sends a message to the user that there are no additional objects to read. If the object count is greater than one at block 435, then at block 440, the APAL determines if there are more top objects to retrieve. If there are no more top objects to receive at block 435, then at block 425, the APAL sends a message to the user that there are no more top objects to retrieve. If there are more top objects to receive at block 435, then at block 445, the APAL uses the top object to retrieve all information related to the top object and the chain of objects from the database 125. At block 430, the APAL calls the database 125 to retrieve the information. At block 450, the APAL determines if all the information has been retrieved. If all the information has not been retrieved at block 450, then the APAL increases the count at block 455 and repeats the method 400 at block 440. If all the information has been retrieved at block 450, then the APAL formulates the object at block 460. The APAL further returns the top object count to check whether there are any further objects to retrieve at block 440. In addition, at block 465, the APAL stores the object data structures in a list. The APAL then returns a message to the user at block 425. As such, the method 300 iterates though all available parent objects to obtain a complete parent child relation from the database 125. In the illustrative example, the objects include the combined cycle block, the gas turbine and the steam turbine. Once the APAL receives the complete information about the one parent object, then web-service formulates the unique data structure (similar to that of persist service) and adds that to a list that is maintained internally by the web service to communicate with the client. After all iterations, the web-service sends the entire list of parent objects to the client 105. Through this the client receives all the parent child relationships that existed within the database 125.

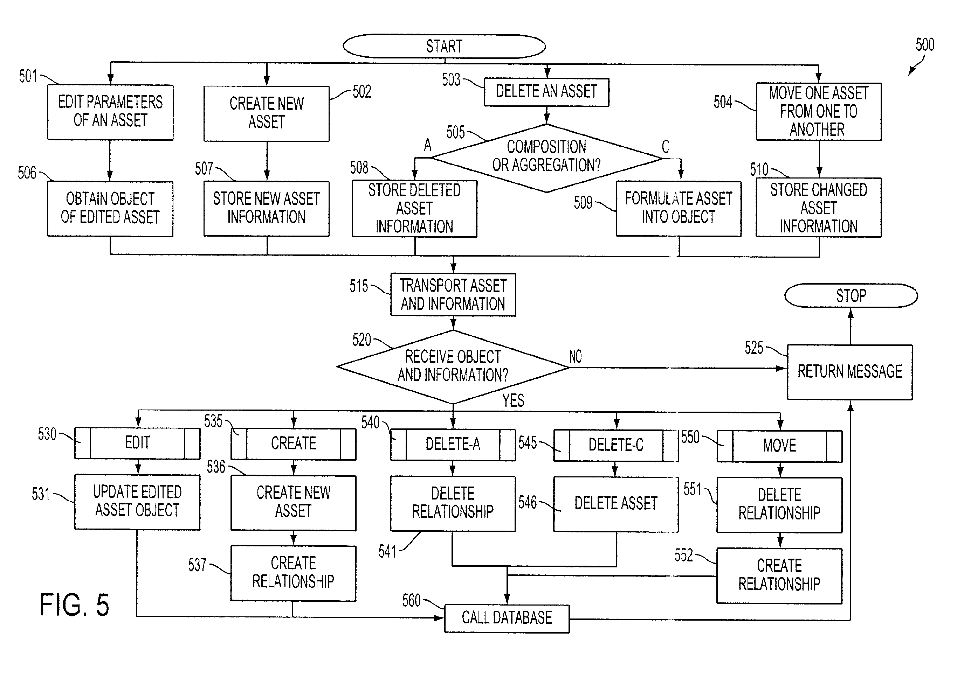

As described herein, the system 100 can be further implemented to enable a user to perform various edit operations on the existing the asset configuration that was earlier retrieved from the database 125. The APAL performs corresponding operations based on type of edit that have been performed on the configuration. In exemplary embodiments, once the user decides to persist any of the changes to the database 125, the APAL verifies if any edit requests have been made through a service oriented architecture platform (SOAP). If one or more edit request have been received from SOAP, the web service internally formulates any or all of the following service calls: an update call if any of the asset parameters have been updated; a delete call in case an existing asset have been deleted; a create call and a create Relationship call in case a new asset have been created; and a combination of delete and create relationship if an asset has been moved from one parent to other The service then sends the response back to the client 105 when the update operation completes with success or failure. FIG. 5 illustrates a flowchart for a method 500 for saving edited power plant information to the database 125 in accordance with exemplary embodiments. The method 500 starts with the user requesting the save operation after editing. In exemplary embodiments, the user can perform any or all of the edit operations described herein on the configuration that has been retrieved from the database 125 or available in the database 125. In exemplary embodiments, the user can edit the parameters of a an asset at block 501, create a new asset within the configuration at block 502, delete an existing asset at block 503, and move a child asset from one parent node to another at block 504. If the user edits the parameter of an asset at block 501, then at block 506, the APAL retrieves the object of the edited asset. If the user creates a new asset, then at block 507, the APAL notes the parent under which the new asset us created along with the new asset information. If the user deletes an asset at block 503, then at block 505, the APAL determines if the deletion is a composition or an aggregation of objects. If the deletion is an aggregation at block 505, then at block 508, the APAL keeps note of the deleted asset relationship with the parent. If the deletion is a composition at block 505, then at block 509, the APAL formulates the asset into the object. If the user moves one asset from one object to another at block 504, then at block 510, the APAL notes the moved assets old parent and the assets new parent. Regardless of the type of edit the users performs, at block 515, the APAL transports the edited asset and information to the server 115 via the transport layer 106. At block 520, the APAL determines if the object and information about the asset is received in the server 115. If the object and information is not received in the server at block 520, then at block 525, the APAL sends a message to the user that the object and information has not been received. The user can then take corrective action. If the object and information is received in the server at block 520, then the APAL takes various actions depending on the type of change. If the change was the edit of a parameter at block 530, then at block 531, the APAL updates the edited asset object. If the change was the creation of a new asset at block 535, then at block 536 the APAL creates the new asset. In addition the APAL creates the relationship at block 536. If the change was an aggregated deletion at block 540, then at block 541, the APAL deletes the relationship. If the change was a composition deletion at block 545, then at block 546 the APAL deletes the asset. If the change was moving an asset at block 550, then at block 551, the APAL deletes the old relationship and then creates a new relationship. Regardless of the type of change, the APAL then calls the database 125 at block 560 to store the changes. Then at block 525, a message is sent to the user that the changes have been made.

It will be appreciated that in other exemplary embodiments, the system 100 can implement simple or complex query mechanisms to perform operations to and from the database 125. The system 100 can implement any of the operations to and from the database 124 with any generic web service. In addition, the system 100 could also implement direct application program interface (API) or function calls from the client 105 to perform similar operations to and from the database 125. The system 100 could also support a web application that allows the user to interact with the database 125 and perform the necessary operations.

Technical effects include but are not limited to the ability of any plant engineer to develop tools to create /save / update power plant assets by using the web-service infrastructure. Any web service client can access this asset information from the APAL high availability server 115 to analyze the assets and its status. Assets can be monitored for its health and can be disconnected (e.g., in the case of malfunction) at any time by the client 105 that connects to the web service that maintains the assets. The system 100 allows the database and PIM to interact with each other seamlessly. The power plant operator can view the latest status of the plant assets at any point of time. The system 100 provides a single unique platform for configuring any power plant with all the possible assets. Any different or new kinds of assets can be accessed or monitored by using the service. Any third party application can be developed anywhere in the world against the web service to manage their power plant assets. The system 100 provides a generic web service that caters to any web applications or desktop client tools to manage the assets related to the power plant. In addition, the system 100 provides a web service to check the health of the asset and disconnect the asset in case the asset is malfunctioning. The complete plant asset configuration can be saved in the way it is configured using the APAL for the future retrieval purpose. The configuration can be retrieved with the same parent child relationship as it was persisted using the APIs provided. The edited plant configuration can also be saved or updated to the same database. The database structure is generic enough that it can be accessed from anywhere by connecting through web client. All the database contents are available through high performance webserver so that the configuration can be access by any web device. Sites spread across various geographical location can share the plant configuration that have been persisted into the database.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A control system asset management method, comprising:
calling, by a processor (205), a web service for at least one of persisting, reading, and saving an edited control system asset;
receiving, by the processor (205), a data structure associated with a control system asset and control system asset information;
in response to receiving the data structure, generating, by the processor (205), a message verifying receipt of the data structure; and
making, by the processor (205), a call to a database (125) for at least one of persisting, reading and saving an edited control system asset,
wherein the database (125) is configured to store the data structure and relationships of the data structure to a plurality of data structures.

2. The method as claimed in Claim 1 wherein persisting the control system asset comprises:
converting the control system asset to the data structure; and
persisting the control system asset in the database (125) as the data structure.

3. The method as claimed in Claim 2 further comprising:
determining a parent child relationship between the data structure and the plurality of data structures.

4. The method as claimed in Claim 3 wherein the parent child relationship is at least one of bi-directional and uni-directional.

5. The method as claimed in any preceding Claim wherein reading the control system asset comprises:
identifying a top data structure in a chain of data structures from the database (125);
retrieving the top data structure and the chain of data structures from the database;
storing the top data structure and the chain of data structures in a list; and
sending a message that the top data structure and the chain of data structures have been retrieved.

6. The method as claimed in any preceding Claim wherein saving the edited control system asset comprises:
identifying that the edited control system asset has been edited by at least one of editing parameters of the control system asset, creating a new control system asset, deleting the control system asset, and moving the control system asset to another control system asset.

7. The method as claimed in Claim 6 further comprising:
in response to editing the parameters of the control system asset, retrieving the data structure associated with the control system asset;
in response to creating a new control system asset, identifying a parent child relationship with a new data structure associated with the new control system asset and the plurality of data structures;
in response to deleting the control system asset, determining at least one of an aggregation deletion and a composition deletion; and
in response to moving the control system asset to another control system asset, identifying a parent child relationship of the control system asset and the another control system asset with the plurality of data structures.

8. The method as claimed in Claim 7 further comprising:
in response to receiving the data structure associated with the control system asset and the control system asset information and prior to making the call to the database, determining a state of the edited control system asset.

9. A computer program product for managing control system assets, the computer program product including a non-transitory computer readable medium storing instructions for causing a computer to implement the method as claimed in any preceding Claim.

10. A control system asset management server (115), comprising:
a processor (205) coupled to a database (125) and configured to:
call a web service for at least one of persisting, reading, and saving an edited control system asset;
receive a data structure associated with the control system asset and control system asset information;
in response to receiving the data structure, generate a message verifying receipt of the data structure; and
make a call to the database (125) for at least one of persisting, reading and saving an edited control system asset,
wherein the database (125) is configured to store the data structure and relationships of the data structure to a plurality of data structures.

11. The server as claimed in Claim 10 wherein the processor (205) is further configured to:
convert the control system asset to the data structure;
persist the control system asset in the database as the data structure; and
determine a parent child relationship between the data structure and the plurality of data structures,
wherein the parent child relationship is at least one of bi-directional and uni-directional.

12. The server as claimed in Claim 10 or Claim 11 wherein the processor (205) is further configured to:
identify a top data structure in a chain of data structures from the database (125);
retrieve the top data structure and the chain of data structures from the database;
store the top data structure and the chain of data structures in a list; and
send a message that the top data structure and the chain of data structures have been retrieved.

13. The server as claimed in Claim 10, 11 or 12 wherein the processor (205) is further configured to:
identify that the edited control system asset has been edited by at least one of editing parameters of the control system asset, creating a new control system asset, deleting the control system asset, and moving the control system asset to another control system asset;
in response to editing the parameters of the control system asset, retrieve the data structure associated with the control system asset;
in response to creating a new control system asset, identify a parent child relationship with a new data structure associated with the new control system asset and the plurality of data structures;
in response to deleting the control system asset, determine at least one of an aggregation deletion and a composition deletion;
in response to moving the control system asset to another control system asset, identify a parent child relationship of the control system asset and the another control system asset with the plurality of data structures; and
in response to receiving the data structure associated with the control system asset and the control system asset information and prior to making the call to the database, determine a state of the edited control system asset.
